# EUROPÄISCHE PATENTSCHRIFT

(11) **EP 0 791 282 B1**
(45) Veröffentlichungstag und Bekanntmachung des Hinweises auf die Patenterteilung: **19.08.1998**
(21) Anmeldenummer: 95931912.0
(22) Anmeldetag: 23.09.1995
(51) Int. Cl.: H05B 41/38, H05B 41/392, H05B 41/29

(54) **VORRICHTUNG ZUM BETREIBEN EINER GASENTLADUNGSLAMPE**
DEVICE FOR OPERATING A GAS DISCHARGE LAMP
DISPOSITIF PERMETTANT DE FAIRE FONCTIONNER UNE LAMPE LUMINESCENTE A GAZ

(30) Priorität: 08.11.1994 DE 4439885
(43) Veröffentlichungstag der Anmeldung: 27.08.1997
(73) Patentinhaber: ROBERT BOSCH GMBH, 70442 Stuttgart (DE)
(72) Erfinder: KERN, Robert, D-77887 Sasbachwalden (DE)
(86) Internationale Anmeldenummer: DE9501321
(87) Internationale Veröffentlichungsnummer: WO9614724

(56) Entgegenhaltungen:
- DE-A- 4 400 093
- US-A- 5 084 653

## Beschreibung

### Stand der Technik

Die Erfindung geht aus von einer Vorrichtung zum Betreiben einer Gasentladungslampe nach der Gattung des Hauptanspruchs. Aus **DE-A-4400093** ist ein Vorschaltgerät für eine Hochdruck-Gasentladungslampe bekannt, das zum Zeitpunkt der Polarisationsumkehr einer Gasentladungslampen-Versorgungsspannung eine Spannungserhöhung ermöglicht. Mit dieser Maßnahme soll ein zuverlässiges Wiederzünden der Gasentladungslampe nach dem Umpolvorgang ermöglicht werden, sofern die Gasentladungslampe während des Umpolens erloschen ist. Das bekannte Vorschaltgerät kompensiert somit durch das Bereitstellen einer erhöhten Wiederzündspannung einen erhöhten Zündspannungsbedarf der Gasentladungslampe, der beispielsweise auch bei gealterten Lampen oder während des Startvorgangs besteht. Aus der DE-A 37 15 162 ist eine Schaltungsanordnung zum Betreiben einer Gasentladungslampe bekannt, die einen Spannungswandler enthält, der die von einer Gleichstromquelle zur Verfügung gestellte Energie in eine Wechselspannung geeigneter Höhe und Frequenz umsetzt. Der Spannungswandler erhält an Steuereingängen von der Lampenspannung und vom Lampenstrom abgeleitete Steuersignale zur Versorgung der Gasentladungslampe mit einer vorgegebenen elektrischen Leistung. Während des Umpolvorgangs der Wechselspannung tritt eine momentane Leistungsreduzierung in der Gasentladungslampe auf, die zu einer kurzzeitigen Reduzierung des Lichtbogens führen kann. Eine ausreichend hohe Betriebsfrequenz, die beispielsweise bei einigen 100 Hertz liegen kann, stellt sicher, daß der Lichtbogen während des kurzen Stromnulldurchgangs nicht vollständig erlischt. Die notwendige Spannung nach dem Umpolvorgang zum Aufrechterhalten des Lichtbogens im Nennbetrieb entspricht der normalen Brennspannung der Gasentladungslampe. Eine Reduzierung der der Gasentladungslampe zugeführten elektrischen Leistung führt dazu, daß bei dem Umpolvorgang ein vollständiges Abreißen des Lichtbogens auftritt. Die Energieversorgungsschaltung muß in der Lage sein, die erforderliche Wiederzündspannung nach dem Umpolvorgang aufzubringen. Eine Reduzierung der der Gasentladungslampe zugeführten elektrischen Leistung ist deshalb in dem Maße möglich, wie die Energieversorgungsschaltung in der Lage ist, die Wiederzündspannung aufzubringen.

Der Erfindung liegt die Aufgabe zugrunde, eine Vorrichtung zum Betreiben einer Gasentladungslampe anzugeben, die ein sicheres Betreiben der Gasentladungslampe in einer Betriebsphase mit reduzierter Leistung sicherstellt.

Die Aufgabe wird durch die im Hauptanspruch angegebenen Merkmale gelöst.

### Vorteile der Erfindung

Die erfindungsgemäße Vorrichtung weist den Vorteil auf, daß eine Erhöhung der Ausgangsspannung einer vorhandenen Energieversorgungsschaltung zum Erreichen einer höheren Wiederzündspannung nicht erforderlich ist. Erfindungsgemäß ist vorgesehen, daß bei einer Reduzierung der mittleren Lampenleistung gegenüber dem Nennbetrieb unmittelbar vor dem Umpolen der Wechselspannung innerhalb einer halben Periodendauer eine Erhöhung der Momentanleistung vorgesehen ist. Die kurzzeitige Erhöhung der Momentanleistung vor dem Umpolvorgang bewirkt, daß die notwendige Wiederzündspannung nach dem Umpolvorgang nicht wesentlich gegenüber dem Nennbetrieb erhöht ist.

Vorteilhafte Weiterbildungen und Ausgestaltungen der erfindungsgemäßen Vorrichtung ergeben sich aus abhängigen Ansprüchen.

Eine vorteilhafte Ausgestaltung sieht vor, daß die Erhöhung der Momentanleistung vor dem Umpolvorgang der Leistung im Nennbetrieb entspricht. Eine Energiereserve der Energieversorgungsschaltung ist bei dieser Ausgestaltung nicht erforderlich.

Eine andere vorteilhafte Ausgestaltung, bei der die Energieversorgungsschaltung eine oberhalb der Nennleistung liegende Leistung abgeben kann, sieht vor, daß die kurzzeitige Momentanleistung oberhalb der Nennleistung liegt. Diese Maßnahme stellt ein Wiederzünden der Gasentladungslampe nach dem Umpolvorgang in sämtlichen denkbaren Betriebszuständen sicher, wobei auch eine Alterung der Gasentladungslampe berücksichtigt ist.

Gemäß einer vorteilhaften Weiterbildung ist vorgesehen, daß die Erhöhung der Momentanleistung innerhalb einer halben Periodendauer vor dem Umpolen der Wechselspannung in jeder halben Periode der Wechselspannung vorgesehen ist. Diese Maßnahme erhöht weiter die Zuverlässigkeit der Wiederzündung der Gasentladungslampe nach dem Umpolvorgang.

Eine andere vorteilhafte Weiterbildung sieht vor, daß die Erhöhung der Momentanleistung insbesondere durch eine Erhöhung des Stroms vorgenommen wird, wobei die Stromstärke vorgegeben ist. Die Stromstärke bestimmt die Ionisationsverhältnisse in der Gasentladungslampe und ist deshalb eine wesentliche Kenngröße, die insbesondere bei einem Umpolvorgang Bedeutung hat.

Eine Weiterbildung der erfindungsgemäßen Vorrichtung sieht vor, daß die Erhöhung der Momentanleistung eine vorgegebene Zeit vor dem Umpolvorgang vorgenommen wird, die von der Periodendauer der Wechselspannung abhängt. Diese vorteilhafte Weiterbildung ermöglicht eine Anpassung an eine unterschiedliche Betriebsfrequenz der Gasentladungslampe.

Eine andere Weiterbildung betrifft die Energieversorgungsschaltung, die vorzugsweise als Spannungswandler ausgestaltet ist, der an seinem Ausgang eine Gleichspannung bereitstellt, die in einer nachfolgenden Brückenschaltung, in deren Diagonale die Gasentladungslampe liegt, in eine Wechselspannung umgewandelt wird.

Eine Ausgestaltung dieser Weiterbildung sieht vor, daß der Spannungswandler ein von einer Batterie gespeister DC/DC-Wandler ist.

Die erfindungsgemäß vorgesehenen Weiterbildungen der Energieversorgungsschaltung ermöglichen die Realisierung eines hocheffizienten Spannungswandlers, der intern eine wesentlich höhere Taktfrequenz aufweisen kann, als die Wechselspannung, die der Gasentladungslampe zugeführt wird. Die vergleichsweise niederfrequente Wechselspannung mit einer Frequenz von beispielsweise einigen 100 Hertz wird in der Brückenschaltung erzeugt.

Die erfindungsgemäße Vorrichtung ist insbesondere geeignet zum Betreiben einer metalldotierten Hochdruckgasentladungslampe, die hinsichtlich des Bedarfs einer Wiederzündspannung nach dem Erlöschen des Lichtbogens kritisch ist. Eine bevorzugte Verwendung der Hochdruckgasentladungslampe, insbesondere der metalldotierten Hochdruckgasentladungslampe ist in einem Scheinwerfer eines Kraftfahrzeugs gegeben.

Weitere vorteilhafte Weiterbildungen und Ausgestaltungen der erfindungsgemäßen Vorrichtung zum Betreiben einer Gasentladungslampe ergeben sich aus weiteren abhängigen Ansprüchen und aus der folgenden Beschreibung.

### Zeichnung

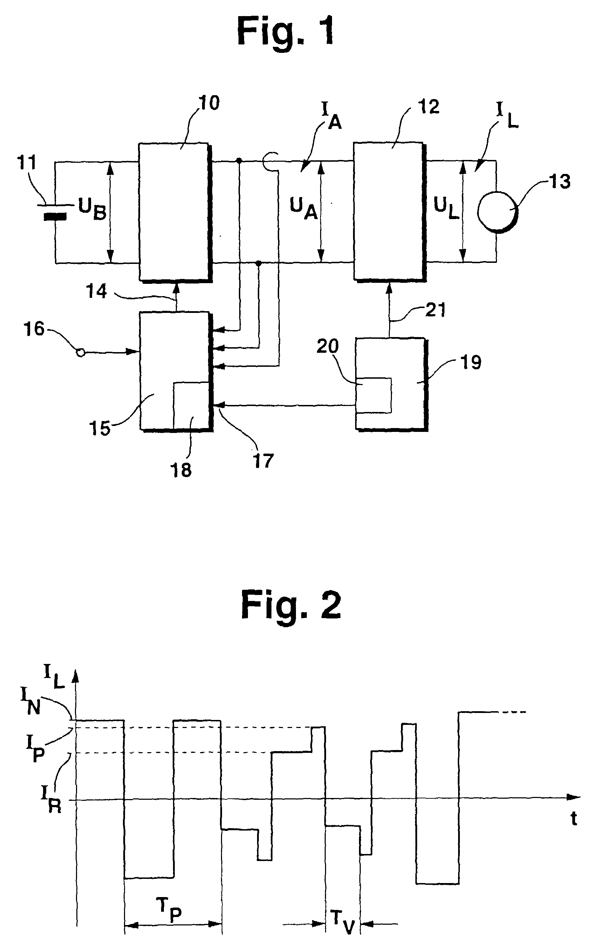

Figur 1 zeigt ein Blockschaltbild einer erfindungsgemäßen Vorrichtung und Figur 2 zeigt einen im Blockschaltbild gemäß Figur 1 auftretenden Signalverlauf in Abhängigkeit von der Zeit.

Figur 1 zeigt einen Spannungswandler 10, der eine von einer Energiequelle 11, welche eine Spannung U_{B} aufweist, bezogene elektrische Leistung in eine entsprechende ausgangsseitige Leistung mit einer vorgegebenen Ausgangsspannung U_{A} oder einem vorgegebenen Ausgangsstrom I_{A} umsetzt. Die Ausgangsspannung U_{A} wird einer Brückenschaltung 12 zugeführt, an deren Ausgang eine Lampenspannung U_{L} auftritt, die zur Speisung einer Gasentladungslampe 13 vorgesehen ist. Ein durch die Gasentladungslampe 13 fließender Lampenstrom ist mit I_{L} bezeichnet.

Der Spannungswandler 10 erhält ein Steuersignal 14 zugeleitet, das von einer Leistungsvorgabeanordnung 15 bereitgestellt wird. Die Leistungsvorgabeanordnung 15 ermittelt das Steuersignal 14 in Abhängigkeit von einer Leistungsvorgabe 16, dem erfaßten Ausgangsstrom I_{A}, der erfaßten Ausgangsspannung U_{A} und einem Startsignal 17. Das Startsignal ist einer in der Leistungsvorgabeanordnung 15 enthaltenen Anordnung 18 zum Erhöhen des Leistungssollwertes zugeleitet. Das Startsignal 17 wird von einer Schaltsignalerzeugung 19 bereitgestellt, die einen Zeitgeber 20 enthält. Ein von der Schaltsignalerzeugung 19 erzeugtes Schaltsignal 21 wird der Brückenschaltung 12 zugeleitet.

Figur 2 zeigt den Lampenstrom I_{L} in Abhängigkeit von der Zeit t. Der Lampenstrom I_{L} weist einen wenigstens näherungsweise rechteckförmigen Signalverlauf auf, wobei die Periodendauer T_{P} festgelegt ist. Ein erstes Stromniveau entspricht einem Nennstrom I_{N}, ein zweites Stromniveau entspricht einem reduzierten Strom I_{R} und ein drittes Stromniveau entspricht einem Impulsstrom I_{P}. Der Impulsstrom I_{P} tritt innerhalb einer halben Periodendauer T_{P} nach einer Verzögerungszeit T_{V} auf.

Die in Figur 1 gezeigte Vorrichtung wird anhand des in Figur 2 gezeigten Verlaufs des Lampenstroms I_{L} in Abhängigkeit von der Zeit t näher erläutert:

Der Spannungswandler 10, die Brückenschaltung 12 sowie die Leistungsvorgabeanordnung 15 und die Schaltsignalerzeugung 19 bilden zusammen eine Energieversorgungsschaltung für die Gasentladungslampe 13. Der Spannungswandler 10 setzt die von der Energiequelle 11 bezogene Leistung in eine vorgegebene Ausgangsspannung U_{A} und/oder einen vorgegebenen Ausgangsstrom I_{A} um. Die Energiequelle 11 ist vorzugsweise eine Batterie mit der eingeprägten Spannung U_{B}. Der Spannungswandler 10 ist vorzugsweise ein Gleichspannungs/Gleichspannungs (DC-DC)-wandler, der die Spannung U_{B}, die bei einer Batterie als Energiequelle 11 eine Gleichspannung ist, in eine im allgemeinen höhere Ausgangsspannung U_{A} umsetzt, die ebenfalls eine Gleichspannung ist. Die nachgeschaltete Brückenschaltung 12 hat die Aufgabe, die Gleichspannung U_{A} in eine zur Speisung der Gasentladungslampe 13 geeignete Lampenspannung U_{L} umzusetzen. Geeignet ist eine Wechselspannung, die Materialtransporteffekte in der Gasentladungslampe 13 sowie eine ungleichmäßige Elektrodenabnutzung vermeidet. Die Brückenschaltung 12 enthält beispielsweise vier Halbleiter-Leistungselemente, die als H-Brücke verschaltet sind, in deren Diagonale die Gasentladungslampe 13 angeordnet ist. Die Brückenschaltung 13 wird mit dem Schaltsignal 21 derart geschaltet, daß die Ausgangsspannung U_{A} des Spannungswandlers 10 in der Polarität abwechselnd an die beiden Elektroden der Gasentladungslampe 13 gelegt wird. Die Frequenz bestimmt das Schaltsignal 21, die beispielsweise bei einigen 100 Hertz liegt. Die Ausgestaltung des Spannungswandlers als DC/DC-Wandler, dessen Ausgangsspannung U_{A} mit der Brückenschaltung 12 in eine Wechselspannung umgeformt wird, weist den Vorteil auf, daß die interne Taktfrequenz des DC-DC-Wandlers 10 erheblich höher liegen kann als die Frequenz des Schaltsignals 21. Der Spannungswandler 10 kann eine interne Taktfrequenz von einigen 100 Kilohertz aufweisen.

Der Spannungswandler 10 kann entweder die Ausgangsspannung U_{A} oder den Ausgangsstrom I_{A} mit der Gasentladungslampe 13 als Last einprägen. Die jeweils andere Größe ist durch den Innenwiderstand der Gasentladungslampe 13 festgelegt. Vorzugsweise wird der Ausgangsstrom I_{A} eingeprägt, da die Gasentladungslampe 13 auf bestimmte Ströme ausgelegt ist. Der Ausgangsstrom I_{A} entspricht dem Lampenstrom I_{L} dem Betrag nach. Ebenso entsprechen sich die Ausgangsspannung U_{A} und die Lampenspannung U_{L} dem Betrag nach.

Zur Vorgabe einer bestimmten Leistung ist die Leistungsvorgabeanordnung 15 vorgesehen, die ein entsprechendes Steuersignal 14 an den Spannungswandler 10 abgibt. Die Leistungsvorgabeanordnung 15 erhält die vorzugebende Leistung von der Leistungsvorgabe 16 als Sollwert zugeführt. Der Leistungsistwert wird aus der erfaßten Ausgangsspannung U_{A} und dem erfaßten Ausgangsstrom I_{A} ermittelt. Die gegebenenfalls erforderlichen Sensoren sind in Figur 1 nicht detailiert eingetragen.

Während des Nennbetriebs der Gasentladungslampe 13 liegt die Amplitude des Lampenstroms I_{L} beispielsweise bei dem in Figur 2 eingetragenen Wert des Nennstroms I_{N}. Der Lampenstrom I_{L} weist einen rechteckförmigen Signalverlauf auf, der eine Periodendauer T_{P} aufweist, die vom Schaltsignal 21 vorgegeben ist. Während des Umpolvorgangs, bei dem der Lampenstrom I_{L} und die Lampenspannung U_{L} einen Nulldurchgang aufweisen, tritt eine mehr oder weniger starke Reduzierung des in der Gasentladungslampe 13 auftretenden Lichtbogens in Abhängigkeit von den vorliegenden Betriebsdaten der Gasentladungslampe 13 auf. Im Extremfall kann ein vollständiges Erlöschen des Lichtbogens nach dem Umpolvorgang auftreten. Im Nennbetrieb der Gasentladungslampe 13, bei dem beispielsweise der Nennstrom I_{N} fließt, tritt im allgemeinen keine nennenswerte Erhöhung der Wiederzündspannung nach dem Umpolvorgang auf. Um ein sicheres Wiederzünden der Lampe nach einem Umpolvorgang auch bei einem Betrieb mit reduzierter Leistung der Gasentladungslampe 13, bei dem beispielsweise der reduzierte Strom I_{R} fließt, sicherzustellen, ist erfindungsgemäß vorgesehen, daß unmittelbar vor dem Umpolvorgang der Lampenspannung U_{L} innerhalb einer halben Periodendauer T_{P} eine Erhöhung der Momentanleistung erfolgt. Zum Erhöhen der Momentanleistung kann beispielsweise die Spannung oder insbesondere der Strom erhöht werden. Im gezeigten Ausführungsbeispiel wird der Lampenstrom I_{L} auf den Impulsstrom I_{P} gegenüber dem reduzierten Strom I_{R} vor dem Umpolen erhöht. Diese Maßnahme reduziert die Wiederzündspannung nach einem gegebenenfalls aufgetretenen Verlöschen des Lichtbogens in der Gasentladungslampe 13 nach dem Umpolvorgang. Der Impulsstrom I_{P} kann beispielsweise identisch mit dem Nennstrom I_{N} gewählt werden. Bei dieser Auslegung braucht der Spannungswandler 10 keine Stromreserven aufzuweisen. Vorzugsweise liegt der Impulsstrom I_{P} einen vorgegebenen Betrag oberhalb des Nennstroms I_{N}, wobei der Spannungswandler 10 in der Lage sein muß, den erhöhten Impulsstrom I_{P} zu liefern. Mit dieser Maßnahme wird eine erhöhte Sicherheit erreicht. Weiterhin kann vorgesehen sein, daß in jeder halben Periodendauer T_{P} eine kurzzeitige Erhöhung der Momentanleistung unmittelbar vor dem Umpolvorgang vorgesehen ist. Diese Maßnahme erhöht weiterhin die Sicherheit des Wiederzündens. Die Information, zu welchen Zeitpunkt die momentane Leistung zu erhöhen ist, kann der Leistungsvorgabeanordnung 15 von der Schaltsignalerzeugung 19 mitgeteilt werden. Die Schaltsignalerzeugung 19 hat die Information über die Periodendauer T_{P} und die Lage der Umpolvorgänge. Das Startsignal 17 wird beispielsweise eine fest vorgegebene Zeit vor dem Umpolvorgang an die Leistungsvorgabeanordnung abgegeben. Das Startsignal 17 bewirkt über die Anordnung zur Erhöhung des Leistungssollwerts eine Erhöhung des Sollwerts. Die vorgegebene Zeit kann beispielsweise von dem in der Schaltsignalerzeugung 19 eingetragenen Zeitgeber 20 festgelegt sein. Der Zeitgeber 20 kann beispielsweise von einem Umpolvorgang gestartet werden und gibt das Startsignal 17 nach Ablauf der vorgegebenen Verzögerungszeit T_{V} aus.

Gemäß einer bevorzugten Weiterbildung ist vorgesehen, daß die Verzögerungszeit T_{V} abhängt von der Periodendauer T_{P}. Somit ist die Zeitdauer der Erhöhung der Momentanleistung durch Erhöhen vom reduzierten Strom I_{R} auf den Impulsstrom I_{T} zeitlich steuerbar in Abhängigkeit von der Periodendauer T_{P}. Daraus ergibt sich eine Anpassung an das Betriebsverhalten der Gasentladungslampe 13, wobei eine höhere Wahrscheinlichkeit für das Erlöschen des Lichtbogens vorliegt, wenn die Periodendauer T_{P} verlängert wird. Die Anpassung erfolgt in der Weise, daß bei einer Erhöhung der Periodendauer T_{P} die Verzögerungszeit T_{V} weniger als proportional erhöht wird. Damit erhöht sich die Zeitdauer der momentanen Leistungserhöhung innerhalb der halben Periodendauer T_{P}.

Als Gasentladungslampe 13 ist beispielsweise eine metalldotierte Hochdruckgasentladungslampe vorgesehen. Eine solche Gasentladungslampe eignet sich als Scheinwerferlampe, die beispielsweise in einem Kraftfahrzeug eingesetzt ist.

## Patentansprüche

1. Vorrichtung zum Betreiben einer Gasentladungslampe, mit einer Energieversorgungsschaltung, die eine Wechselspannung oder einen Wechselstrom vorgegebener Periodendauer zur Speisung der Gasentladungslampe mit einer vorgegebenen Leistung bereitstellt, dadurch gekennzeichnet, daß bei einer Reduzierung der mittleren Lampenleistung gegenüber dem Nennbetrieb unmittelbar vor dem Umpolen der Wechselspannung (U_{L}) oder des Wechselstroms (I_{L}) innerhalb einer halben Periodendauer (T_{P}) eine Erhöhung der Momentanleistung vorgesehen ist.

2. Vorrichtung nach Anspruch 1, dadurch gekennzeichnet, daß die Erhöhung der Momentanleistung bis zur Nennleistung vorgesehen ist.

3. Vorrichtung nach Anspruch 1, dadurch gekennzeichnet, daß die Erhöhung der Momentanleistung über den Wert der Nennleistung hinaus vorgesehen ist.

4. Vorrichtung nach Anspruch 1, dadurch gekennzeichnet, daß die Erhöhung der Momentanleistung vor dem Umpolen der Wechselspannung (U_{L}) oder des Wechselstroms (I_{L}) innerhalb jeder halben Periodendauer (T_{P}) vorgesehen ist.

5. Vorrichtung nach Anspruch 1, dadurch gekennzeichnet, daß die Dauer (T_{P}/2 - T_{V}) der Erhöhung der Momentanleistung von der Periodendauer (T_{P}) abhängt.

6. Vorrichtung nach Anspruch 1, dadurch gekennzeichnet, daß die Energieversorgungsschaltung einen Spannungswandler (10) mit einem Gleichspannungsausgang und einer nachfolgenden Brückenschaltung (12) enthält, in deren Diagonale die Gasentladungslampe (13) angeordnet ist.

7. Vorrichtung nach Anspruch 6, dadurch gekennzeichnet, daß als Energiequelle (11) eine Batterie vorgesehen ist, und daß der Spannungswandler (10) als Gleichspannungs/Gleichspannungs-Wandler ausgestaltet ist.

8. Vorrichtung nach Anspruch 1, dadurch gekennzeichnet, daß als Gasentladungslampe (13) eine metalldotierte Hochdruckgasentladungslampe vorgesehen ist.

9. Vorrichtung nach Anspruch 8, gekennzeichnet durch die Verwendung in einem Kraftfahrzeug.

## Claims

1. Device for operating a gas discharge lamp, having a power supply circuit which provides an AC voltage or an alternating current of prescribed period for feeding the gas discharge lamp with a prescribed power, characterized in that an increase in the instantaneous power is provided in the case of a reduction in the average lamp power by comparison with the nominal operation immediately before reversing the polarity of the AC voltage (U_{L}) or of the alternating current (I_{L}) within a half period (Tₚ).

2. Device according to Claim 1, characterized in that the increase in the instantaneous power is provided up to the nominal power.

3. Device according to Claim 1, characterized in that the increase in the instantaneous power is provided beyond the value of the nominal power.

4. Device according to Claim 1, characterized in that the increase in the instantaneous power is provided before reversing the polarity of the AC voltage (U_{L}) or of the alternating current (I_{L}) within each half period (Tₚ).

5. Device according to Claim 1, characterized in that the duration (Tₚ/2 - T_{V}) of the increase in the instantaneous power is a function of the period (Tₚ).

6. Device according to Claim 1, characterized in that the power supply circuit contains a voltage transformer (10) having a DC voltage output and a downstream bridge circuit (12) in the diagonal of which the gas discharge lamp (13) is arranged.

7. Device according to Claim 6, characterized in that a battery is provided as energy source (11), and in that the voltage transformer (10) is configured as a DC-DC converter.

8. Device according to Claim 1, characterized in that a metal-doped high-pressure gas discharge lamp is provided as gas discharge lamp (13).

9. Device according to Claim 8, characterized by its use in a motor vehicle.

## Revendications

1. Dispositif de mise en oeuvre d'une lampe à décharge de gaz comprenant une alimentation fournissant une tension alternative ou un courant alternatif de périodes prédéterminées pour alimenter la lampe à décharge de gaz avec une puissance prédéterminée,
caractérisé en ce que
pour une réduction de la puissance moyenne de la lampe par rapport à celle du fonctionnement nominal, directement avant l'inversion de polarité de la tension alternative (U_{L}) ou du courant alternatif (I_{L}) dans une demie période (T_{P}), on augmente la puissance instantanée.

2. Dispositif selon la revendication 1,
caractérisé en ce que
l'augmentation de la puissance instantanée peut aller jusqu'à la puissance nominale.

3. Dispositif selon la revendication 1,
caractérisé en ce que
l'augmentation de la puissance instantanée peut dépasser la valeur de la puissance nominale.

4. Dispositif selon la revendication 1,
caractérisé en ce que
l'augmentation de la puissance instantanée avant l'inversion de polarité de la tension alternative (U_{L}) ou du courant alternatif (I_{L}) se produit à l'intérieur de chaque demie période (T_{P}).

5. Dispositif selon la revendication 1,
caractérisé en ce que
la durée (T_{P}/2 - T_{V}) de l'augmentation de la puissance instantanée dépend de la période (T_{P}).

6. Dispositif selon la revendication 1,
caractérisé en ce que
l'alimentation comprend un convertisseur de tension (10) avec une sortie de tension continue et un montage en pont (12) en aval avec dans la diagonale la lampe à décharge de gaz (13).

7. Dispositif selon la revendication 6,
caractérisé en ce que
la source d'énergie (11) est une batterie et le convertisseur de tension (10) est un convertisseur continu/continu.

8. Dispositif selon la revendication 1,
caractérisé en ce que
la lampe à décharge de gaz (13) est une lampe à décharge de gaz à haute pression à dopage par métal.

9. Dispositif selon la revendication 8,
caractérisé par
son application à un véhicule automobile.
